# EUROPEAN PATENT APPLICATION

(11) **EP 4 572 213 A1**
(43) Date of publication of application: **18.06.2025**
(21) Application number: 23853064.6
(22) Date of filing: 11.08.2023
(51) Int. Cl.: H04L 5/00, H04L 5/14, H04W 8/24, H04L 1/08

(54) **METHOD FOR COMMUNICATING AND DEVICE FOR SAME IN WIRELESS COMMUNICATION SYSTEM**

(30) Priority: 11.08.2022 KR 20220100846
(71) Applicant: LG Electronics Inc., Yeongdeungpo-gu Seoul 07336 (KR)
(72) Inventor: SHIM, Jaenam, Seoul 06772 (KR); AHN, Joonkui, Seoul 06772 (KR); KO, Hyunsoo, Seoul 06772 (KR); YANG, Suckchel, Seoul 06772 (KR); YOU, Hyangsun, Seoul 06772 (KR)
(74) Representative: Plasseraud IP
(86) International application number: PCT/KR2023/011922
(87) International publication number: WO 2024/035198

(57) **Abstract**

Disclosed are a method for a terminal to transmit an uplink signal and a device for same in a wireless communication system according to various embodiments. Disclosed are a method and a device for same, the method comprising the steps of: receiving resource allocation information about a plurality of uplink time resources from a base station; receiving configuration information about a nominal time domain window (TDM); and transmitting demodulation reference signal (DMRS)-bundled uplink signals in the plurality of uplink signal resources on the basis of the nominal TDW, wherein the plurality of uplink time resources include a first uplink time resource and a second uplink time resource differentiated on the basis of whether there is overlap with a downlink time resource, and the nominal TDW is set on the basis of the boundary between the first uplink time resource and the second uplink time resource.

## Description

### TECHNICAL FIELD

A method of transmitting a demodulation reference signal (DMRS)-bundled uplink (UL) signal by a user equipment (UE) in a wireless communication system and a device therefor are provided.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### Technical Problem

The present disclosure provides a method and device for significantly increasing the efficiency of joint channel estimation through configuration of a nominal time domain window (TDW) considering different channel environments between a sub-band full duplex (SBFD) time duration and a half duplex (HD) time duration and bundling of an uplink (UL) signal based on the nominal TDW.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

According to an aspect, a method of transmitting an uplink (UL) signal by a user equipment (UE) in a wireless communication system includes receiving, from a base station (BS), resource allocation information for a plurality of UL time resources, receiving configuration information for a nominal time domain window (TDW), and transmitting demodulation reference signal (DMRS)-bundled UL signals based on the nominal TDW in the plurality of UL time resources, wherein the plurality of UL time resources include a first UL time resource and a second UL time resource that are distinguished based on whether the UL time resources overlap a DL time resource, and the nominal TDW is configured based on the configuration information and a boundary between the first UL time resource and the second UL time resource.

The nominal TDW may be sequentially configured to the plurality of UL time resources not to overlap the boundary between the first UL time resource and the second UL time resource.

The nominal TDW may be configured to always start or end at the boundary between the first UL time resource and the second UL time resource.

The configuration information may include information on a length of the TDW.

The nominal TDW may end at the boundary between the first UL time resource and the second UL time resource even if the length of the TDW is shorter than that indicated by the configuration information.

The first UL time resource may be a time resource that overlaps the DL time resource, and the second UL time resource may be a time resource that does not overlap the DL time resource.

The nominal TDW may be configured only for the second UL time resource based on the first time resource including less than a preset number of slots.

The nominal TDW may be configured for each of the first UL time resource and the second UL time resource based on the first time resource including a preset number or more slots.

The first UL time resource may be a time resource for sub-band full duplex (SBFD) or single frequency full duplex (SFFD), and the second UL time resource may be a time resource for a half-duplex (HD) operation.

According to another aspect, a user equipment (UE) for transmitting an uplink (UL) signal in a wireless communication system includes a radio frequency (RF) transceiver, and a processor connected to the RF transceiver, wherein the processor controls the RF transceiver to receive, from a base station (BS), resource allocation information for a plurality of UL time resources divided into a first UL time resource and a second UL time resource based on whether the UL time resources overlap a DL time resource, receive configuration information for a nominal time domain window (TDW), and transmit demodulation reference signal (DMRS)-bundled UL signals based on the nominal TDW in the plurality of UL time resources, and the nominal TDW is configured based on the configuration information and a boundary between the first UL time resource and the second UL time resource.

According to another aspect, a method of receiving an uplink (UL) signal by a base station (BS) in a wireless communication system includes transmitting, to a user equipment (UE), resource allocation information for a plurality of UL time resources, receiving configuration information for a nominal time domain window (TDW), and receiving demodulation reference signal (DMRS)-bundled UL signals based on the nominal TDW in the plurality of UL time resources, wherein the plurality of UL time resources include a first UL time resource and a second UL time resource that are distinguished based on whether the UL time resources overlap a DL time resource, and the nominal TDW is configured based on the configuration information and a boundary between the first UL time resource and the second UL time resource.

### Advantageous Effects

Various embodiments may significantly increase the efficiency of joint channel estimation through configuration of a nominal time domain window (TDW) considering different channel environments between a sub-band full duplex (SBFD) time duration and a half duplex (HD) time duration and bundling of an uplink (UL) signal based on the nominal TDW.

Even if the UE may not clearly distinguish between a time duration during which an SBFD operation is performed at a base station (BS) and a time duration during which an HD operation is performed, the UE may ensure a gain of joint channel estimation even if the SBFD time duration and the HD time duration coexist through DMRS bundling based on a nominal TDW configured by considering a boundary between the SBFD time duration and the HD time duration.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 illustrates a process in which a UE transmits ACK/NACK via PUSCH.
FIG. 7 illustrates an example of a CSI-related procedure.
FIG. 8 is a diagram for explaining a method of performing a full duplex operation in an NR system.
FIG. 9 and FIG. 10 are diagrams for explaining sub-band full duplex (SBFD) and single frequency full duplex (SFFD) operations.
FIG. 11 is a diagram for explaining a method of configuring a nominal time domain window (TDW) related to demodulation reference signal (DMRS) bundling by a UE.
FIG. 12 is a diagram illustrating a method for a BS to receive DMRS bundled UL signals.
FIG. 13 illustrates a communication system applied to the present disclosure;
FIG. 14 illustrates wireless devices applicable to the present disclosure.
FIG. 15 illustrates another example of a wireless device to which the present disclosure is applied.

### DETAILED DESCRIPTION

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

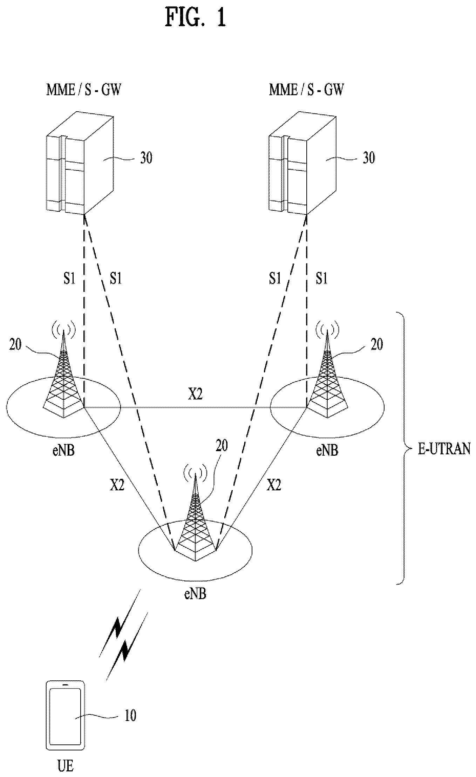

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

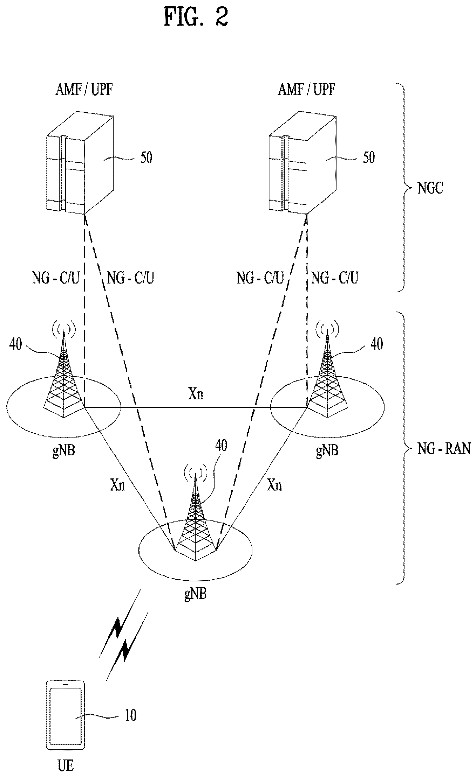

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

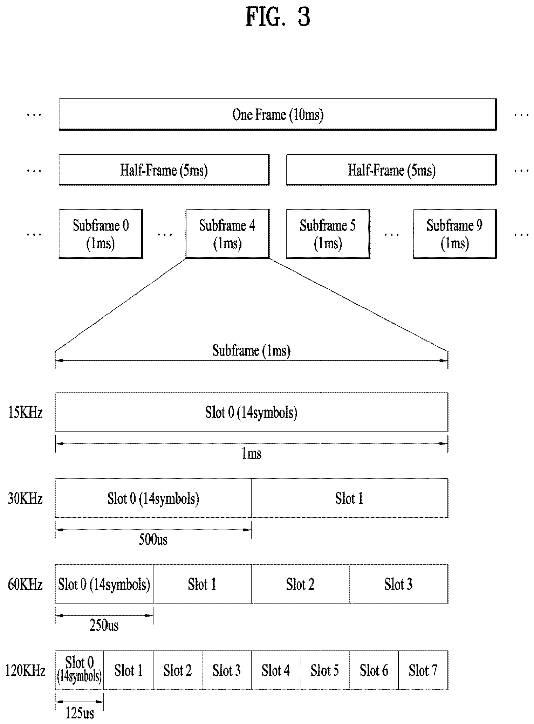

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame.u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

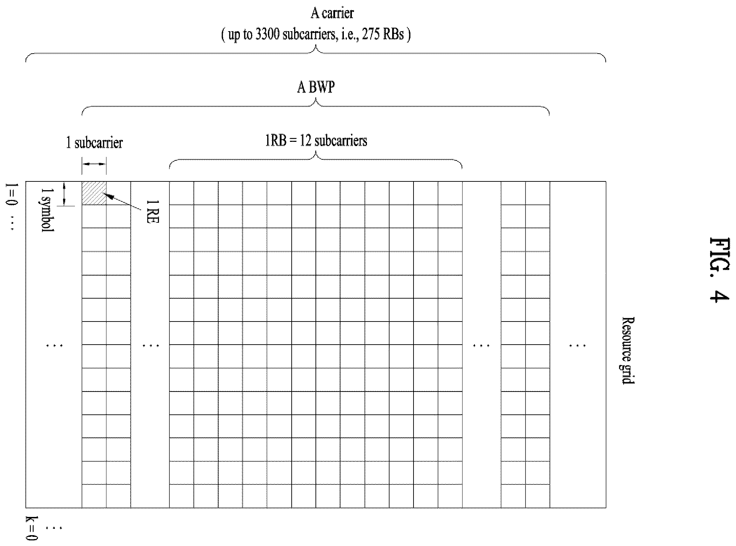

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., subcarrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

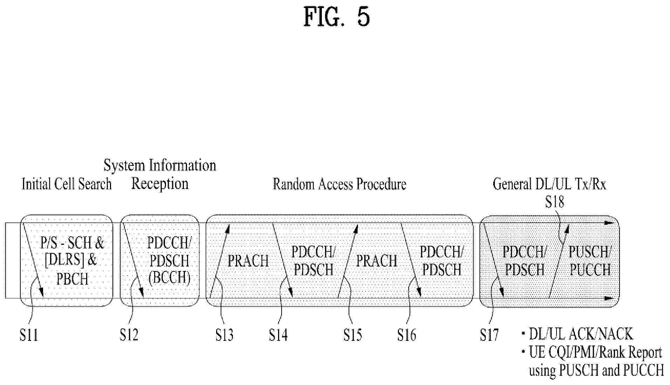

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

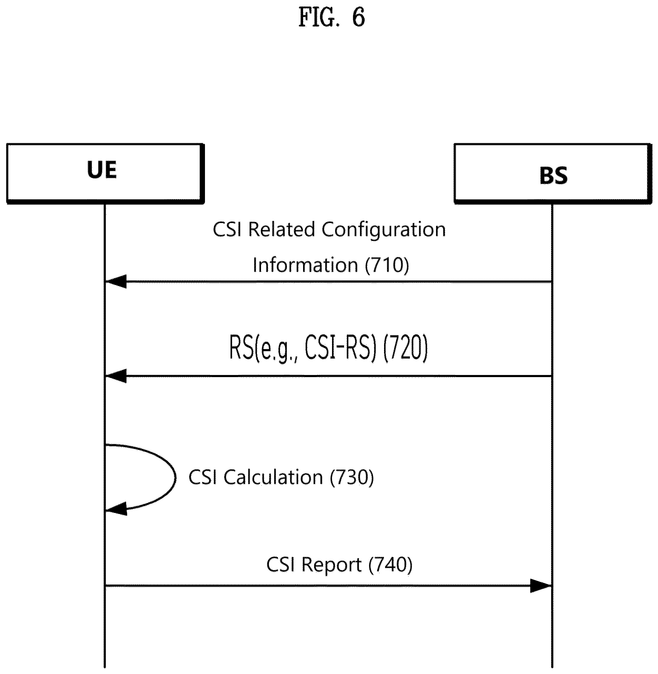

FIG. 6 illustrates an exemplary ACK/NACK transmission process

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.
the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

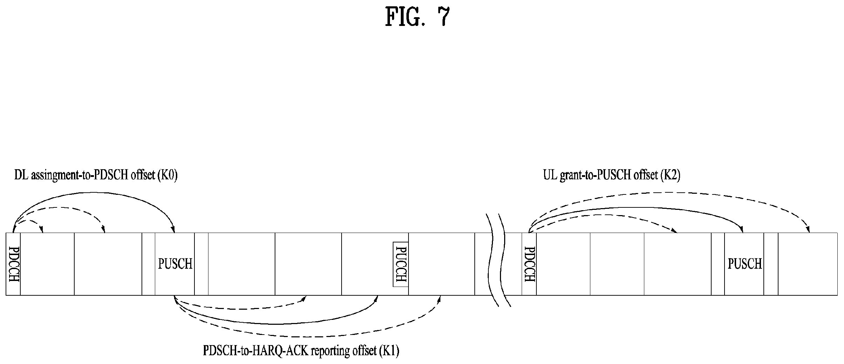

FIG. 7 shows an example of a CSI related procedure.

The UE receives configuration information related to CSI from the BS via RRC signaling

(710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

### Quasi-co location (OCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time interval.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

### Full duplex operation for NR

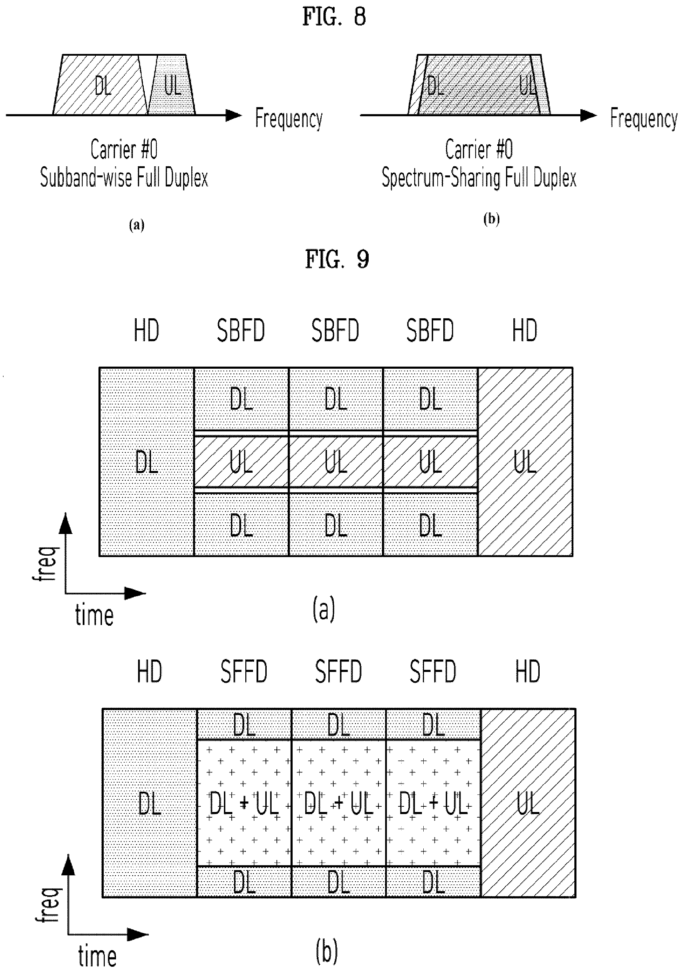

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in (a) of FIG. 8 and a spectrum-sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

### Background of FDR

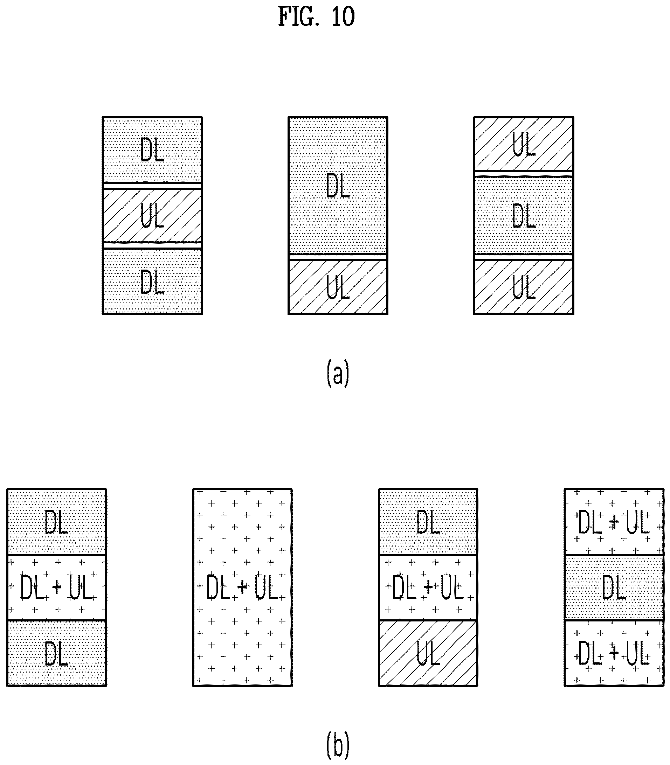

FIG. 9 and FIG. 10 are diagrams for explaining sub-band full duplex (SBFD) and single frequency full duplex (SFFD) operations.

Introduction of FDR has been discussed in certain scenarios (e.g. 3GPP RAN plenary). There are two types of FDRs discussed in the above scenarios, first, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In detail, referring to FIG. 9, time resources may include time resources operating in half duplex (HD) and time resources operating in full duplex (FD), such as SB-FD or SS-FD. The time resources may include some time resources for the operation of SB-FD and the remaining time resources for the operation of HD, as illustrated in (a) of FIG. 9. The time resources may include time resources for the operation of SS-FD and the remaining time resources for the operation of HD, as illustrated in (b) of FIG. 9. In this case, a unit of time resource (for an operation as SS-FD, an operation as SB-FD, or an operation as HD) may be a slot or symbol unit. In the time resources operating as SB-FD, some frequency resources may be used as DL resources, and some frequency resources may be used as UL resources.

In operating this FDR, the gNB may consider dividing time durations into half duplex (HD) and full duplex (FD). This may be broadly divided into sub-band full duplex (SBFD) and single frequency full duplex (SFFD), and a slot configuration and cell resource pattern therefor may be considered to operate based on the following example.

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in (b) of FIG. 9 and (b) of FIG. 10. In detail, referring to (b) of FIG. 10, a sub-band region of DL and a sub-band region of UL may overlap each other. Alternatively, referring to (b) of FIG. 9, the SBFD operation may be performed based on a resource pattern of a cell or BS. For example, in the resource pattern, half-duplex (HD) slots/symbols and SBFD slots/symbols may be TDMed with each other.

Hereinafter, in terms of a gNB operating in the SBFD (or SFFD), a time duration during which DL transmission and UL reception are present at the same time at the same/different frequencies is defined as an SBFD slot or SFFD slot and is described.

First, hereinafter, prior to a description of a method of performing demodulation reference signal (DMRS) bundling related to a sub-band full duplex (SBFD) slot or a single frequency full duplex (SFFD) slot, technical details related to DMRS bundling are described in detail.

### DMRS bundling

As defined in the scenario (Rel-17), the gNB may instruct/configure a time domain window (TDW) related to receiving DMRS bundling to the UE. In this case, the UE may transmit a DMRS-bundled UL signal based on the TDW. Detailed operations related thereto are detailed in Tables 5 to 8 below (see section 6.1.7 of TS 38.214).

**[Table 5]**

| | | | |
|---|---|---|---|
| For PUSCH transmissions of PUSCH repetition Type A scheduled by DCI format 0_1 or 0_2, PUSCH repetition Type A with a configured grant, PUSCH repetition Type B and TB processing over multiple slots, when *PUSCH-DMRS-Bundling* is enabled, and for PUCCH transmissions of PUCCH repetition, when *PUCCH-DMRS-Bundling* is enabled, the UE determines one or multiple nominal TDWs, as follows: | | | |
| | - For PUSCH transmissions of repetition Type A, PUSCH repetition Type B and TB processing over multiple slots, the duration of each nominal TDW except the last nominal TDW, in number of consecutive slots, is: | | |
| | | - Given by PUSCH-TimeDomainWindowLength, if configured. | |
| | | - Computed as min ([maxDMRS-BundlingDuration], M), if PUSCH-TimeDomainWindowLength is not configured, where M is the time duration in consecutive slots of N*K PUSCH transmissions, and where: | |
| | | | - For PUSCH transmissions of PUSCH repetition Type A, N=1 and K is the number of repetitions, as defined in Clause 6.1.2.1. |
| | | | - For PUSCH transmissions of PUSCH repetition Type B, N=1 and K is the number of nominal repetitions, as defined in Clause 6.1.2.1. |
| | | | - For PUSCH transmissions of TB processing over multiple slots, N is the number of slots used for TBS determination and K is the number of repetitions of the number of slots N used for TBS determination, as defined in Clause 6.1.2.1. |
| | - For PUCCH transmissions of PUCCH repetition, the duration of each nominal TDW except the last nominal TDW, in number of consecutive slots, is: | | |
| | | - Given by PUCCH-TimeDomainWindowLength, if configured. | |
| | | - Computed as min ([maxDMRS-BundlingDuration], M), if PUCCH-TimeDomainWindowLength is not configured, where M is the time duration in consecutive slots from the first slot determined for PUCCH transmissions of PUCCH repetition to the last slot determined for PUCCH transmissions of PUCCH repetition according to clause 9.2.6 of [6, TS 38.213]. | |
| | - For PUSCH transmission of a PUSCH repetition Type A scheduled by DCI format 0_1 or 0_2 and PUSCH repetition Type A with a configured grant, when *AvailableSlotCounting* is enabled, and for TB processing over multiple slots: | | |
| | | - The start of the first nominal TDW is the first slot determined for the first PUSCH transmission. | |
| | | - The end of the last nominal TDW is the last slot determined for the last PUSCH transmission. | |
| | | - The start of any other nominal TDWs is the first slot determined for PUSCH transmission after the last slot determined for PUSCH transmission of a previous nominal TDW. | |
| | - For PUSCH transmissions of a PUSCH repetition type A scheduled by DCI format 0_1 or 0_2 and PUSCH repetition Type A with a configured grant, when the UE is not | | |
| | | | configured with *AvailableSlotCounting* or when *AvailableSlotCounting* is disabled, and for PUSCH repetition type B: |
| | | | - The start of the first nominal TDW is the first slot for the first PUSCH transmission. |
| | | | - The end of the last nominal TDW is the last slot for the last PUSCH transmission. |
| | | | - The start of any other nominal TDWs is the first slot after the last slot of a previous nominal TDW. |
| | | - For PUCCH transmissions of a PUCCH repetition: | |
| | | | - The start of the first nominal TDW is the first slot determined for the first PUCCH transmission. |
| | | | - The end of the last nominal TDW is the last slot determined for the last PUCCH transmission. |
| | | | - The start of any other nominal TDWs is the first slot determined for PUCCH transmission after the last slot determined for PUCCH transmission of a previous nominal TDW. |

**[Table 6]**

| | | |
|---|---|---|
| For PUSCH transmissions of a PUSCH repetition Type A scheduled by DCI format 0_1 or 0_2, PUSCH repetition Type A with a configured grant, PUSCH repetition Type B and TB processing over multiple slots, a nominal TDW consists of one or multiple actual TDWs. The UE determines the actual TDWs as follows: | | |
| | - The start of the first actual TDW is the first symbol of the first PUSCH transmission in a slot for PUSCH transmission of PUSCH repetition type A scheduled by DCI format 0_1 or 0_2, or PUSCH repetition Type A with a configured grant, or PUSCH repetition type B or TB processing over multiple slots within the nominal TDW. | |
| | - The end of an actual TDW is | |
| | | - The last symbol of the last PUSCH transmission in a slot for PUSCH transmission of PUSCH repetition type A scheduled by DCI format 0_1 or 0_2, or PUSCH repetition |
| | | Type A with a configured grant, or PUSCH repetition type B or TB processing over multiple slots within the nominal TDW, if the actual TDW reaches the end of the last PUSCH transmission within the nominal TDW. |
| | | - The last symbol of a PUSCH transmission before the event, if an event occurs which causes power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots within the nominal TDW, and the PUSCH transmission is in a slot for PUSCH transmission of PUSCH repetition type A scheduled by DCI format 0_1 or 0_2, or PUSCH repetition Type A wth a configured grant, or PUSCH repetition type B or TB processing over multiple slots. |
| | | - When *PUSCH-Window-Restart* is enabled, the start of a new actual TDW is the first symbol of the PUSCH transmission after the event which causes power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots within the nominal TDW, and the PUSCH transmission is in a slot for PUSCH transmission of PUSCH repetition type A scheduled by DCI format 0_1 or 0_2, or PUSCH repetition Type A with a configured grant, or PUSCH repetition type B or TB processing over multiple slots. |

**[Table 7]**

| | |
|---|---|
| For PUCCH transmissions of PUCCH repetition, a nominal TDW consists of one or multiple actual TDWs. The UE determines the actual TDWs as follows: | |
| | - The start of the first actual TDW is the first symbol of the first PUCCH transmission in a slot determined for PUCCH transmission within the nominal TDW. |
| | - The end of an actual TDW is |
| | - The last symbol of the last PUCCH transmission in a slot determined for transmission of the PUCCH within the nominal TDW, if the actual TDW reaches the end of the last PUCCH transmission within the nominal TDW. |
| | - The last symbol of a PUCCH transmission before the event, if an event occurs which causes power consistency and phase continuity not be maintained across PUCCH transmissions of PUCCH repetition within the nominal TDW, and the PUCCH transmission is in a slot determined for transmission of the PUCCH. |
| | - When *PUCCH-Window-Restart* is enabled, the start of a new actual TDW is the first symbol of the PUCCH transmission after the event which causes power consistency and phase continuity not to be maintained across PUCCH transmissions of PUCCH repetition within the nominal TDW, and the PUCCH transmission is in a slot determined for transmission of the PUCCH. |

**[Table 8]**

| | |
|---|---|
| Events which cause power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots, or PUCCH transmissions of PUCCH repetition, within the nominal TDW, are: | |
| | - A downlink slot or downlink reception or downlink monitoring based on *tdd-UL-DL-ConfigurationCommon* and *tdd-UL-DL-ConfigurationDedicated* for unpaired spectrum. |
| | - The gap between any two consecutive PUSCH transmissions, or the gap between any two consecutive PUCCH transmissions, exceeds 13 symbols for normal cyclic prefix or exceeds 11 symbols for extended cyclic prefix. |
| | - The gap between any two consecutive PUSCH transmissions, or the gap between any two consecutive PUCCH transmissions, does not exceed 13 symbols but other uplink transmissions are scheduled between the two consecutive PUSCH transmissions or the two consecutive PUCCH transmissions. |
| - For PUSCH transmissions of PUSCH repetition type A, or PUSCH repetition type B or TB processing over multiple slots, a dropping or cancellation of a PUSCH transmission according to clause 9, clause 11.1 and clause 11.2A of [6, TS 38.213]. | |
| - For PUCCH transmissions of PUCCH repetition, a dropping or cancellation of a PUCCH transmission according to clause 9, clause 9.2.6 and clause 11.1 of [6, TS 38.213]. | |
| - For any two consecutive PUSCH transmissions of PUSCH repetition type A, or PUSCH repetition type B, and when two SRS resource sets are configured in *srs-ResourceSetToAddModList* or *srs-ResourceSetToAddModListDCI-*0-2 with higher layer parameter *usage* in *SRS-ResourceSet* set to 'codebook' or 'noncodebook', a different SRS resource set association is used for the two PUSCH transmissions of PUSCH repetition type A, or PUSCH repetition type B, according to Clause 6.1.2.1. | |
| - For any two consecutive PUCCH transmissions of PUCCH repetition, and when a PUCCH resource used for repetitions of a PUCCH transmission by a UE includes first and second spatial relations or first and second sets of power control parameters, as described in [10, TS 38.321] and in clause 7.2.1 of [6, TS 38.213], different spatial relations or different power control parameters are used for the two PUCCH transmissions of PUCCH repetition, according to Clause 9.2.6 of [6, TS 38.213]. | |
| - Uplink timing adjustment in response to a timing advance command according to clause 4.2 of [6, TS 38.213]. | |
| - Frequency hopping. | |
| - For reduced capability half-duplex UEs, | |
| | - a dropping or cancellation of a PUSCH transmission according to clause 17.2 of [6, TS 38.213] or |
| | - an overlapping of the gap between two consecutive PUSCH transmissions and any symbol of downlink reception or downlink monitoring |
| The UE shall maintain power consistency and phase continuity within an actual TDW, across PUSCH transmissions of PUSCH repetition Type A scheduled by DCI format 0_1 or 0_2, or PUSCH repetition Type A with a configured grant, or PUSCH repetition type B or TB processing over multiple slots, or across PUCCH transmissions of PUCCH repetition, in case the actual TDW is created in response to frequency hopping, or in response to the use of a different SRS resource set association for the two PUSCH transmissions of PUSCH repetition type A, or PUSCH repetition type B, or in response to the use of different spatial relations or different power control parameters for the two PUCCH transmissions of PUCCH repetition, or in response to any event not triggered by DCI or MAC-CE. The UE maintains power consistency and phase continuity within an actual TDW, across PUSCH transmissions of PUSCH repetition Type A scheduled by DCI format 0_1 or 0_2, or PUSCH repetition Type A with a configured grant, or PUSCH repetition type B or TB processing over multiple slots, or across PUCCH transmissions of PUCCH repetition, in case the actual TDW is created in response to an event triggered by DCI other than frequency hopping or by MAC-CE, subject to UE capability. | |

As described in Tables 5 to 8, as an indication method related to the current DMRS bundling, the gNB may indicate to the UE the TDW to be configured for PUSCH/PUCCH repetition transmission within the maximum duration included in capability or capability information reported from the UE. The instructed/configured TDW may be repeated when the TDW is less than the number of repetition transmissions, and an actual TDW may start with start of the configured TDW. Within the actual TDW, the UE may start transmitting UL signals (PUSCH/PUCCH) while maintaining power consistency/phase continuity. When an event occurs, such as failure to maintain power consistency and phase continuity, the actual TDW may be terminated and a new actual TDW may start after the event, depending on the capability of the UE. The actual TDW is terminated along with the termination of the configured TDW.

Therefore, when a gNB performing SBFD instructs repetition transmission of UL signals across an SBFD UL slot and an HD UL slot, if transmission frequency resources (of the UL signal) are different, this may be treated as the event according to the existing rule. However, the SBFD UL slot is likely to be ahead of the (HD) UL slot in time, and thus, in this case, a UE without the specified capability may perform DMRS bundling only in the SBFD slot even if joint channel estimation (CE) is instructed. Even for the same frequency resources, joint CE may not be performed due to the operation of successive interference cancellation (SIC) in terms of the gNB.

Hereinafter, considering the problems described above, an instruction method related to performing DMRS bundling suitable for the SBFD (or SFFD) by a gNB is described in detail.

### DMRS bundling for SBFD

In the scenario (3GPP TS 38 Rel-17) described above, DMRS bundling for coverage enhancement is introduced to strengthen UL coverage. This is a method for performing joint channel estimation at a receiving end of the gNB, and in this case, the UE may perform transmission that ensures phase continuity and power consistency for a designated period of time. The SBFD has been discussed in the scenario (3GPP TS 38 Rel-18) described above. The SBFD refers to an environment in which there is a time when transmission and reception are performed at the same time in terms of the gNB, and in such an environment, DMRS bundling may be instructed to enhance UL coverage. In this case, UL transmission of the UE in a time duration in which DL and UL of the gNB exist simultaneously and UL transmission of the UE in a time duration in which only UL reception of the gNB exists may have different channel environments, or even if the channel environments are the same, joint combining may not be performed due to antenna configuration of the gNB, an SIC operation, and the like. In contrast, the UE may not know (a time duration in which channel environments are different as described above, or a time duration in which antenna configurations and SCI operations are different), and thus the UE may perform transmission for DMRS bundling according to the existing configuration. Such an operation may limit the operation of the UE but may not substantially obtain a gain of the joint channel estimation. Under this background, hereinafter, a method of indicating a time domain window (TDW) for DMRS bundling in an SBFD environment and/or a method of placing the TDW is described in detail.

Hereinafter, it is assumed that a UE that is served by the gNB operating or working with SBFD is instructed to perform joint channel estimation for receiving DMRS bundling at the gNB end. For convenience of explanation, SBFD is assumed in the following explanation, but simple extensions may also be applied to SFFD.

In the description, in terms of the gNB, a slot in which DL and UL (or, DL signal and UL signal) exist simultaneously is defined as an SBFD slot, and a slot configured as UL (UL slot) to the UE from among the SBFD slots is defined as an SBFD UL slot. In terms of the gNB, a slot that only has UL is defined as an HD UL slot to distinguish the HD UL slot from the SBFD UL slot.

In the existing DMRS bundling, the gNB may be instructed to provide a nominal TDW along with an instruction of repetition transmission of a PUSCH or PUCCH of the UE, and the UE may place the nominal TDW for the repeatedly transmitted PUSCH or PUCCH and start the actual TDW together with start of the nominal TDW. In this case, the UE may perform (UL signal) transmission for maintaining phase continuity and power consistency for DMRS bundling, and terminate the actual TDW when a predefined event in which it is not possible to maintain the phase continuity or the power consistency. Then, when the capability of the UE is supported, the UE may restart the actual TDW within the nominal TDW. These events (or event list) may be predefined as frequency hopping, gNB indicated TA adjustment, Tx power change, DL monitoring/receiving, other UL transmission, etc. (see TS 38.214).

Considering a gNB performing SBFD operation, the number of antennas for UL Rx in an SBFD UL slot and the number of antennas for UL Rx in an HD UL slot may be different from each other. Alternatively, depending on gNB implementation, SIC may be performed, and an effective channel may be different in the SBFD UL slot and the HD UL slot. However, in this case, when the UE repeatedly transmits a PUSCH or a PUCCH according to the existing configuration, the UE operation may be restricted to repeatedly transmit the PUSCH or the PUCCH for DMRS bundling, but actual DMRS bundling may be difficult, making it difficult to obtain an effect of UL coverage enhancement.

Therefore, to resolve such problems, the following options may be considered. The options described below may be commonly applied to PUSCH repetition transmission and PUCCH repetition transmission. Alternatively, the options described below may be selectively applied to PUSCH repetition transmission, PUSCH repetition transmission based on an available slot, and PUCCH repetition transmission, respectively. The options described below may be applied to all or some UL repetition transmission for which joint channel estimation is to be configured from among repetition transmission of a UL channel transmitted by a UE, such as PUSCH repetition transmission type A, PUSCH repetition transmission type B, PUCCH repetition transmission, and dynamic PUCCH repetition transmission. The configured TDW described below may mean the nominal TDW in the scenario (3GPP TS 38.213, 214, 331, or the like) described above.

The SBFD UL slot and HD UL slot described below are explained assuming that the gNB explicitly instructs the UE that some of UL slots of the UE are SBFD UL slots and the remaining UL slots are HD UL slots or that the UE identifies/recognizes that some of UL slots of the UE are SBFD UL slots and the remaining slots are HD UL slots according to implicit configuration or rules even if there is no direct instruction for SBFD UL slots. In the following description, it is assumed that the UE may be explicitly instructed by the BS through slot format determination for the SBFD slots from among the plurality of slots or may identify the SBFD slots from among the plurality of slots based on BWP switching time information and/or time information (or time resources) related to RBs that are not used by the same BWP.

In the following description, it is assumed that switching of SBFD and HD operations are performed with an SBFD UL slot and an HD UL slot and an instruction to the UE for the switching are at a slot level, but it is obvious that the instruction method may be extended and applied to the symbol level. For example, in the following description, a boundary between the SBFD UL slot and the HD UL slot is assumed to be a slot boundary, but this may be extended to a symbol level and the following options may be applied as an SBFD UL symbol and an HD UL symbol.

### (1) Alt. 1

In Alt.1, the events described above may be (additionally) defined based on a boundary between an SBFD UL slot (or SBFD UL symbol) and an HD UL slot (or HD UL symbol).

The gNB may indicate the SBFD slot to the UE through RRC/MAC-CE/DCI, or the like or the UE may implicitly determine that certain slots from among the UL slots are indicated as SBFD slots. In this way, when repetition transmission of a PUSCH or a PUCCH and DMRS bundling are instructed together across SBFD UL slots and HD UL slots that are configured as UL from among SBFD slots instructed by the gNB or determined by the UE, the UE may determine/determine the boundary between the SBFD UL slot and the HD UL slot by event occurrence (e.g., an event in which the actual TDW ends). The UE may always (re)perform Tx for DMRS bundling after the event described above (or after the event ends) regardless of the capability of the UE. That is, the boundary between the SBFD UL slot and the HD UL slot may be a semi-static event, and the actual TDW may be terminated just before such an event, and when the configured TDW is not terminated, the actual TDW may be (re)started after the event.

### (2) Alt. 2

In Alt.2, the UE may determine whether an event occurs based on the boundary of an SBFD UL slot (or, SBFD UL symbol) and an HD UL slot (or, UL symbol) and a predetermined condition.

In the case of Alt 1 described above, due to frequent occurrence of events at every SBFD slot and HD slot boundary point, the actual TDW may be (re)started for each occurrence of the events, and a gain of DMRS bundling may be significantly reduced due to frequent (re)starts of the actual TDW. Therefore, it may be additionally considered to add a specific condition to the Alt 1 described above to lower a frequency of event occurrence (i.e., thereby further increasing the DMRS bundling gain). For example, the slots may be configured in the following order of an HD slot, an SBFD slots, and an HD slot. In this case, when the number of SBFD slots located in the middle is less than a certain number, it may be determined that the event does not occur (in other words, an event may be determined only when the number of SBFD slots is greater than a certain level). That is, when the number of SBFD slots is less than a certain number, the boundary between the SBFD slot and the HD slot may be determined as not occurrence of an event. As another example, when slots are configured in the order of an HD slot, an SBFD slots, and an HD slot in the same manner as above, a slot boundary that changes from the HD slot to the SBFD slot may be determined as an event (event occurrence), but a slot boundary that changes from the SBFD slot to the HD slot may be determined as not an event (or event occurrence). Alternatively, conversely, a slot boundary that changes from the SBFD slot to the HD slot may be determined as an event (event occurrence), but a slot boundary that changes from the HD slot to the SBFD slot may be determined as not an event (or event occurrence).

Alternatively, whether to apply a special TX (spatial) filter to an FD slot (or SBFD slot) may vary depending on whether the (SBFD) FD slot has different inband emission requirements from the HD slot is defined. Whether to apply the Tx spatial filter to the FD slot may vary depending on the detailed capability even for an FD capable UE. Therefore, different spatial filters or Tx filters may be applied between transmission in the SBFD UL slot and transmission in the HD UL slot based on the capability of the UE. Alternatively, for a UE having the capability described above (e.g., different Tx filters applicable to each of the SBFD slot and the HD slot), a new Tx filter or spatial filter may be defined and applied in addition to a beam indicated by SRI in the SBFD UL slot and the HD UL slot (for the purpose of reducing emissions through the Tx filter, or the like). Therefore, in terms of a network, reduction in emission through a TX filter or improvement in UL coverage of the corresponding UE through a UL joint RX may be selected. In this case, when reduction in emission through TX filter is selected in terms of a network, the gNB may instruct to apply different Tx filters to the UL Tx in the SBFD UL slot and HD UL slot of the UE. In this case, the boundary between the SBFD UL slot and the HD UL slot may all be treated as an event. Such an event is defined as a semi-static event to prevent a gain of joint CE due to DMRS bundling from being reduced along the boundary between the SBFD UL slot and the HD UL slot.

### (3) Alt. 3

In Alt.3, a boundary between an SBFD UL slot (SBFD UL symbol) and an HD UL slot (or UL symbol) may be the start and/or end point of the nominal TDW or may be configured as the start and/or end point of the nominal TDW.

In detail, the existing nominal TDWs are placed in a UL slot or a UL slot to be determined to be available. Alternatively, the nominal TDW may be placed by distinguishing between the SBFD UL slot and the HD UL slot. In other words, the nominal TDW may be placed for each of the SBFD UL slot and the HD UL slot.

For example, the nominal TDW may always be terminated at the boundary between the SBFD UL slot and the HD UL slot. In this case, when there is any repetition transmission, the nominal TDW may be restarted at the boundary between the SBFD UL slot and the HD UL slot. In other words, the nominal TDW may always end with the end of the SBFD UL slot and may be (re)started with start of a subsequent HD UL slot. For example, when a length of the nominal TDW is configured to 4, 6 slots for UL repetition transmission of the UE may be configured as SBFD UL->SBFD UL->SBFD UL->(HD) UL->(HD) UL->(HD) UL (i.e., when the UE knows information about the SBFD UL slot and the HD UL slot). In this case, a first nominal TDW may be placed in first, second, and third slots, and a second nominal TDW may be placed in fourth, fifth, and sixth slots.

Alternatively, a BS may determine a size of the TDW by considering the boundary between the SBFD UL slot and the HD UL slot. In this case, when 6 slots are configured for UL repetition transmission of the UE and the length of the nominal TDW is 3, the UE may place the first TDW for the first to third slots (3 slots) and the second TDW for the fourth to sixth slots.

The UE may be explicitly instructed by the BS through slot format determination for the SBFD slots from among the plurality of slots or may identify the SBFD slots from among the plurality of slots based on BWP switching time information and/or time information (or time resources) related to RBs that are not used by the same BWP.

### (4) Alt. 4

In Alt.4, DMRS bundling may not be performed in the SBFD UL slot (or UL symbol). That is, even if the UE receives configuration/instruction for joint CE, the UE may perform DMRS bundling only for HD UL slots and not for SBFD UL slots. That is, the UE may place the nominal TDW only in the HD UL slot as in the existing operation and perform UL transmission for DMRS bundling only within the actual TDW configured depending on whether an event occurs within the nominal TDW. In other words, the nominal TDW is (assumed and) placed only in the HD UL slot, and the nominal TDW (or configured TDW) may not be placed in the SBFD UL slot. In this case, the UE may not perform Tx for DMRS bundling in the SBFD UL slot.

### (5) Alt. 5

In Alt.5, different nominal TDWs may be configured for an SBFD UL slot (SBFD UL symbol) and an HD UL slot (HD UL symbol).

In detail, when a UE receiving a service from a gNB capable of an SBFD operation has an SBFD UL slot from among the configured UL slots, the UE may be configured for DMRS bundling from the gNB. In this case, the UE may assume/determine that two nominal TDWs are configured. For example, the UE may be configured with two nominal TDWs, a first nominal TDW to be placed in the SBFD UL slot and a second nominal TDW to be placed in the HD UL slot, and each of the first nominal TDW and the second nominal TDW may be placed in only one of the SBFD UL slot and the HD UL slot. In this case, the UE may configure the actual TDW according to the existing rules (e.g., whether a previously defined event occurs) in each of the first nominal TDW and the second nominal TDW. Alternatively, the nominal TDW configured according to existing rules may be used as a nominal TDW to be placed in the HD UL slot, and a nominal TDW having a new nominal TDW length based on prior agreement or calculation from the nominal TDW length placed in the HD UL slot may be placed in the SBFD UL slot. In other words, when the UE configures the first nominal TDW for the HD UL slot according to the existing configuration method, the UE may calculate or determine the length of the second nominal TDW for the SBFD UL slot from the length of the first nominal TDW based on a predefined method and place the second nominal TDW having the calculated length in the SBFD UL slot. For example, when the UE determines the length of the nominal TDW for the HD slot as 3 according to the existing method, the UE may determine the length of the nominal TDW for the SBFD UL slot as 2, which is 3 minus 1 (or adding a specific value).

### (6) Alt. 6

In Alt.6, the gNB may configure the nominal TDW used only in the HD UL slot (HD UL symbols) and may not place the nominal TDW in the SBFD UL slot (symbol). However, when the UE is configured for DMRS bundling, the UE may always perform Tx for DMRS bundling. In other words, when DMRS bundling is instructed to the UE, the UE may transmit a UL signal by performing DMRS bundling for the SBFD UL slot even if the nominal TDW is not configured for the SBFD UL slot and thus the nominal TDW is not placed in the SBFD UL slot.

For example, the SBFD UL slot may be placed as several slots between DL and UL, and thus the UE configured with joint CE may always perform Tx for DMRS bundling for the SBFD UL slot. That is, the UE determines that DMRS bundling is implicitly indicated in the SBFD UL slot. In other words, when the nominal TDW for DMRS bundling for the HD slot is configured, the UE may transmit a DMRS-bundled UL signal in the SBFD UL slot even if DMRS bundling is not separately instructed for the SBFD UL slot.

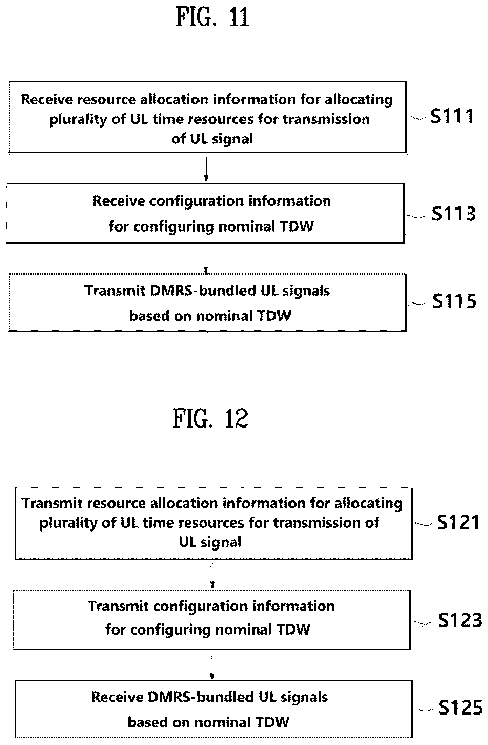

FIG. 11 is a diagram for explaining a method of configuring a nominal TDW related to DMRS bundling by a UE.

Referring to FIG. 11, the UE may receive resource allocation information that allocates a plurality of UL time resources for transmission of a UL signal (S111). The resource allocation information may be DCI for scheduling transmission or repetition transmission of the UL signal. Here, the plurality of UL time resources may include a first UL time resource that overlaps the DL time resource for the DL signal in the time domain and a second UL time resource that does not overlap the DL time resource in the time domain, as described in the section of "DMRS bundling for SBFD". In other words, the plurality of UL time resources may be divided into the first UL time resource that overlaps the DL time resource in the time domain and the second UL time resource that does not overlap the DL time resource in the time domain. As described above, the first UL time resource may be the SBFD UL slot, and the second UL time resource may be the HD UL slot. For example, the plurality of UL time resources may include a plurality of consecutive SBFD UL slots in the time domain and a plurality of consecutive HD UL slots in the time domain. That is, the first UL time resource may include at least one UL slot, and the second UL time resource may include at least one UL slot. The BS may be a network or a gNB.

For example, the UE may be explicitly instructed with the first UL time resource being SBFD slots and the second UL time resource being HD slots from among a plurality of UL time resources from the BS through slot format determination. Alternatively, the UE may identify the first UL time resource and the second UL time resource from among the plurality of slots based on BWP switching time information related to the plurality of UL time resources and/or time information (or time resource) related to an RB not used by the same BWP. Through this identification, the UE may identify/estimate a boundary between the first UL time resource and the second UL time resource from among the plurality of UL time resources.

Then, the UE may receive configuration information for configuring the nominal TDW from the BS (S113). The nominal TDW may be a time duration configured for DMRS bundling for a UL signal as a time duration during which the UE repeatedly transmits a UL signal while maintaining power consistency and phase continuity, as described in the section of "DMRS bundling for SBFD". The UE may repeatedly transmit the UL signal while maintaining power consistency and phase continuity within the nominal TDW. The configuration information may include information for configuring the nominal TDW by considering the boundary between the first UL time resource and the second UL time resource as described above. For example, the configuration information may include information on the size or length of the nominal TDW determined based on the maximum time duration over which power consistency and phase continuity may be maintained included in capability information reported by the UE. Alternatively, the configuration information may include information on the size or length of the nominal TDW determined based on the capability information and the boundary between the first UL time resource and the second UL time resource. The configuration information may be transmitted to the UE through the DCI together with the resource allocation information.

Alternatively, the UE may configure the at least one nominal TDW based on the configuration information and the boundary between the first UL time resource and the second UL time resource (hereinafter, time resource boundary). For example, the UE may configure a plurality of nominal TDWs for the plurality of UL time resources based on the time resource boundary and the configuration information. In detail, the UE may sequentially place nominal TDWs corresponding to the size of the nominal TDW included in the configuration information on the plurality of UL time resources. However, the UE may be configured such that the one nominal TDW does not overlap or pass through the time resource boundary. That is, the UE may sequentially place a nominal TDW having the size of the nominal TDW on the plurality of UL time resources, but may configure/determine that the nominal TDW is (always) terminated at the time resource boundary such that the nominal TDW does not overlap the time resource boundary. Alternatively, the UE may configure/determine that the nominal TDW always starts at the time resource boundary such that the nominal TDW does not overlap the time resource boundary. In this case, the nominal TDW is placed not to overlap the time resource boundary, and thus the nominal TDW having a length shorter than the size of the TDW indicated by the configuration information may be configured from among the nominal TDWs placed/configured for the plurality of UL time resources.

For example, through the configuration information, the size (or length) of the nominal TDW may be indicated as 4, and UL slots sequentially including 3 consecutive SBFD UL slots (or the first UL time resource) and 4 consecutive HD UL slots (or the second UL time resource) may be allocated. In this case, the UE may configure the nominal TDW having a length of three slots such that the nominal TDW terminates at the boundary between the SBFD slots and the HD slots for the SBFD UL slots. Then, the UE may configure the nominal TDW starting at the boundary and having a length of four slots for the HD UL slots. In this way, even if the size of the TDW is indicated as 4 by the configuration information, a nominal TDW of size 3 may be configured for the SBFD UL slots, which are the first UL time resources. That is, the UE may place/configure the nominal TDW according to the length of the nominal TDW included in the configuration information, and may place/configure the nominal TDW such that the nominal TDW always ends and/or starts at the boundary between the SBFD slots and the HD slots.

Alternatively, the UE may configure/determine the nominal TDW by further considering the number of slots included in the first UL time resource. For example, if the number of slots included in the first UL time resource is less than a preset threshold number, the UE may configure the nominal TDW only for the second UL time resource without configuring the nominal TDW for the first UL time resource. In this case, the nominal TWD may be configured to start from the time resource boundary in the second UL time resource while having a size according to the configuration information. In contrast, the UE may sequentially configure/determine the nominal TDW for each of the first UL time resource and the second UL time resource by considering the configuration information and the time resource boundary when the number of slots included in the first UL time resource is greater than or equal to a preset threshold number.

Then, the UE may repeatedly transmit the DMRS-bundled UL signals based on the configured nominal TDW (or multiple TDWs) (S115). For example, the UE may repeatedly transmit the UL signal while maintaining power consistency and phase continuity within the nominal TDW such that DMRS is bundled.

FIG. 12 is a diagram illustrating a method for a BS to receive DMRS-bundled UL signals.

Referring to FIG. 12, the BS may transmit resource allocation information that allocates a plurality of UL time resources for transmission of a UL signal, to the UE (S121). The resource allocation information may be DCI for scheduling transmission or repetition transmission of the UL signal. Here, the plurality of UL time resources may include a first UL time resource that overlaps the DL time resource for the DL signal in the time domain and a second UL time resource that does not overlap the DL time resource in the time domain, as described in the section of "DMRS bundling for SBFD". As described above, the first UL time resource may be the SBFD UL slot, and the second UL time resource may be the HD UL slot.

Then, the BS may transmit configuration information for configuring the nominal TDW to the UE (S 123). The nominal TDW may be a time duration configured for DMRS bundling for a UL signal as a time duration during which the UE repeatedly transmits a UL signal while maintaining power consistency and phase continuity, as described in the section of "DMRS bundling for SBFD". In this case, the BS may receive the repeatedly transmitted UL signals while maintaining power consistency and phase continuity within the nominal TDW. The configuration information may include information on the size or length of the nominal TDW determined based on the maximum time duration over which power consistency and phase continuity may be maintained included in capability information reported by the UE. Alternatively, the configuration information may include information on the size or length of the nominal TDW determined based on the capability information and the boundary between the first UL time resource and the second UL time resource. The BS may transmit the configuration information and the resource allocation information together to the UE via DCI.

Alternatively, the BS may expect to configure the nominal TDW based on a time resource boundary as the configuration information and the boundary between the first UL time resource and the second UL time resource (hereinafter, time resource boundary). For example, the BS may predict/expect that at least one nominal TDW is configured for the plurality of UL time resources according to the size of the TDW included in the configuration information and that the nominal TDW always ends or starts at the time resource boundary. For example, the BS may expect that the nominal TDWs of the size of the TDWs included in the configuration information may be sequentially placed on the plurality of UL time resources, but may predict/expect that the nominal TDWs (always) end at the time resource boundary such that the nominal TDWs do not overlap the time resource boundary. In this case, the nominal TDW is placed not to overlap the time resource boundary, and thus the BS may predict that the nominal TDW having a length shorter than the size of the TDW indicated by the configuration information is configured from among the nominal TDWs placed/configured for the plurality of UL time resources.

Alternatively, the BS may expect to configure/determine the nominal TDW by further considering the number of slots included in the first UL time resource. For example, if the number of slots included in the first UL time resource is less than a preset threshold number, the BS may predict to configure the nominal TDW only for the second UL time resource without configuring the nominal TDW for the first UL time resource. In this case, the BS may not expect DMRS bundling for UL signals transmitted on the first UL time resource.

Then, the BS may repeatedly receive the DMRS-bundled UL signals based on the configured nominal TDW (or multiple TDWs) (S125). For example, the BS may expect power consistency and phase continuity to be maintained within the nominal TDW and receive the DMRS- bundled UL signals within the nominal TDW.

In this way, the proposed method may significantly increase the efficiency of joint channel estimation by configuring the nominal TDW and bundling UL signals based thereon by considering different channel environments between the SBFD (sub-band full duplex) time duration and the HD (half duplex) time duration when the SBFD operation is performed by the BS. Alternatively, a gain of joint channel estimation according to DMRS bundling may be ensured to the maximum even when the SBFD time duration and the HD time duration coexist by configuring the nominal TDW by additionally considering the boundary between the SBFD time duration and the HD time duration.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

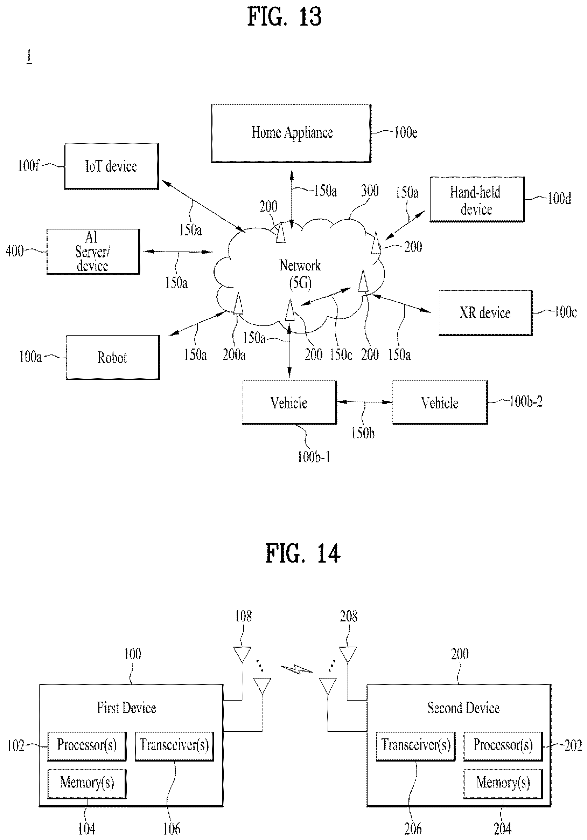

FIG. 13 illustrates a communication system applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 14 illustrates a wireless device applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or the UE may include the processor 102 and the memory 104 that are connected to the RF transceiver. The memory 104 may include at least one program capable of performing operations related to the embodiments described with reference to FIGS. 9 to 12.

In detail, the processor 102 may control the RF transceiver 106 to receive, from a BS, resource allocation information for a plurality of UL time resources divided into a first UL time resource and a second UL time resource based on whether the UL time resources overlap a DL time resource, receive configuration information for a nominal time domain window (TDW), and transmit demodulation reference signal (DMRS)-bundled UL signals based on the nominal TDW in the plurality of UL time resources. Here, the nominal TDW may be configured based on the configuration information and the boundary between the first UL time resource and the second UL time resource.

Alternatively, a chipset including the processor 102 and the memory 104 may be provided. In this case, the chipset may include at least one processor and at least one memory operably connected to the at least one processor and configured to, when executed, cause the at least one processor to perform operations including receiving, from a BS, resource allocation information for a plurality of UL time resources divided into a first UL time resource and a second UL time resource based on whether the UL time resources overlap a DL time resource, receiving configuration information for a nominal time domain window (TDW), and transmitting demodulation reference signal (DMRS)-bundled UL signals based on the nominal TDW in the plurality of UL time resources. Here, the nominal TDW may be configured based on the configuration information and the boundary between the first UL time resource and the second UL time resource. The at least one processor may perform the operations for the embodiments described with reference to FIGS. 9 to 12 based on a program contained in the memory.

A computer-readable storage medium including at least one program that causes the at least one processor to perform the operation may be provided, the operation including receiving, from a BS, resource allocation information for a plurality of UL time resources divided into a first UL time resource and a second UL time resource based on whether the UL time resources overlap a DL time resource, receiving configuration information for a nominal time domain window (TDW), and transmitting demodulation reference signal (DMRS)-bundled UL signals based on the nominal TDW in the plurality of UL time resources. The computer program may include programs capable of performing the operations for the embodiments described with reference to FIGS. 9 to 12.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or the network may include a processor 202, a memory 204, and/or a transceiver 206. The processor 202 may control the transceiver 206 or the RF transceiver to transmit resource allocation information for a plurality of UL time resources to the UE, receive configuration information for a nominal time domain window (TDW), and receive demodulation reference signal (DMRS)-bundled UL signals based on the nominal TDW in the plurality of UL time resources. Here, the plurality of UL time resources may include a first UL time resource and a second UL time resource that are distinguished based on whether the UL time resources overlap a DL time resource, and the nominal TDW may be configured based on the configuration information and a boundary between the first UL time resource and the second UL time resource.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

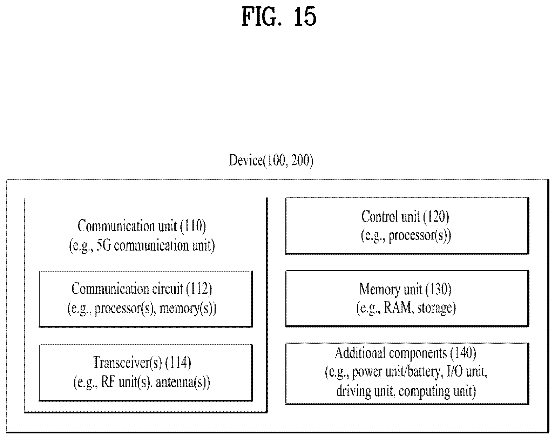

FIG. 15 illustrates another example of a wireless device applied to the present disclosure.

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### Industrial Availability

The embodiments of the present disclosure as described above may be applied to various mobile communication systems.

## Claims

1. A method of transmitting an uplink (UL) signal by a user equipment (UE) in a wireless communication system, the method comprising:
receiving, from a base station (BS), resource allocation information for a plurality of UL time resources;
receiving configuration information for a nominal time domain window (TDW); and
transmitting demodulation reference signal (DMRS)-bundled UL signals based on the nominal TDW in the plurality of UL time resources,
wherein the plurality of UL time resources include a first UL time resource and a second UL time resource that are distinguished based on whether the UL time resources overlap a DL time resource, and
wherein the nominal TDW is configured based on the configuration information and a boundary between the first UL time resource and the second UL time resource.

2. The method of claim 1, wherein the nominal TDW is sequentially configured to the plurality of UL time resources not to overlap the boundary between the first UL time resource and the second UL time resource.

3. The method of claim 1, wherein the nominal TDW is configured to always start or end at the boundary between the first UL time resource and the second UL time resource.

4. The method of claim 1, wherein the configuration information includes information on a length of the TDW.

5. The method of claim 4, wherein the nominal TDW ends at the boundary between the first UL time resource and the second UL time resource even if the length of the TDW is shorter than that indicated by the configuration information.

6. The method of claim 1, wherein the first UL time resource is a time resource that overlaps the DL time resource, and the second UL time resource is a time resource that does not overlap the DL time resource.

7. The method of claim 6, wherein the nominal TDW is configured only for the second UL time resource based on the first time resource including less than a preset number of slots.

8. The method of claim 6, wherein the nominal TDW is configured for each of the first UL time resource and the second UL time resource based on the first time resource including a preset number or more slots.

9. The method of claim 1, wherein the first UL time resource is a time resource for sub-band full duplex (SBFD) or single frequency full duplex (SFFD), and the second UL time resource is a time resource for a half-duplex (HD) operation.

10. A computer-readable recording medium having recorded thereon a program for performing the method of claim 1.

11. A user equipment (UE) for transmitting an uplink (UL) signal in a wireless communication system, the UE comprising:
a radio frequency (RF) transceiver; and
a processor connected to the RF transceiver,
wherein the processor controls the RF transceiver to receive, from a base station (BS), resource allocation information for a plurality of UL time resources divided into a first UL time resource and a second UL time resource based on whether the UL time resources overlap a DL time resource, receive configuration information for a nominal time domain window (TDW), and transmit demodulation reference signal (DMRS)-bundled UL signals based on the nominal TDW in the plurality of UL time resources, and
wherein the nominal TDW is configured based on the configuration information and a boundary between the first UL time resource and the second UL time resource.

12. A chip set for receiving an uplink (UL) signal from a user equipment (UE) in a wireless communication system, the chip set comprising:
at least one processor; and
at least one memory operatively connected to the at least one processor and configured to, when executed, cause the at least one processor to perform an operation,
wherein the operation includes receiving, from a base station (BS), resource allocation information for a plurality of UL time resources divided into a first UL time resource and a second UL time resource based on whether the UL time resources overlap a DL time resource, receiving configuration information for a nominal time domain window (TDW), and transmitting demodulation reference signal (DMRS)-bundled UL signals based on the nominal TDW in the plurality of UL time resources, and
wherein the nominal TDW is configured based on the configuration information and a boundary between the first UL time resource and the second UL time resource.

13. A method of receiving an uplink (UL) signal by a base station (BS) in a wireless communication system, the method comprising:
transmitting, to a user equipment (UE), resource allocation information for a plurality of UL time resources;
receiving configuration information for a nominal time domain window (TDW); and
receiving demodulation reference signal (DMRS)-bundled UL signals based on the nominal TDW in the plurality of UL time resources,
wherein the plurality of UL time resources include a first UL time resource and a second UL time resource that are distinguished based on whether the UL time resources overlap a DL time resource, and
wherein the nominal TDW is configured based on the configuration information and a boundary between the first UL time resource and the second UL time resource.

14. The method of claim 13, wherein the configuration information includes information on a length of the nominal TDW determined based on a boundary between the first UL time resource and the second UL time resource.

15. A base station (BS) for receiving an uplink (UL) signal in a wireless communication system, the BS comprising:
a radio frequency (RF) transceiver; and
a processor connected to the RF transceiver,
wherein the processor controls the RF transceiver to transmit resource allocation information for a plurality of UL time resources to a user equipment (UE), receive configuration information for a nominal time domain window (TDW), and receive demodulation reference signal (DMRS)-bundled UL signals based on the nominal TDW in the plurality of uplink time resources, and
wherein the plurality of UL time resources include a first UL time resource and a second UL time resource that are distinguished based on whether the UL time resources overlap a DL time resource, and the nominal TDW is configured based on the configuration information and a boundary between the first UL time resource and the second UL time resource.
